# EUROPÄISCHE PATENTANMELDUNG

(11) **EP 2 289 606 A2**
(43) Veröffentlichungstag der Anmeldung: **02.03.2011**
(21) Anmeldenummer: 10004778.6
(22) Anmeldetag: 06.05.2010
(51) Int. Cl.: B01D 12/00, F26B 21/14, F26B 5/00

(54) **Maschine zur Trocknung von Werkstücken nach einer wässrigen Reinigung**

(30) Priorität: 01.09.2009 DE 202009011836 U
(71) Anmelder: Riebesam GmbH & Co. KG, 39307 Genthin (DE)
(72) Erfinder: Franke, Berndt, 39307 Genthin (DE); Riebesam, Hans Jürgen, 71540 Murrhardt (DE)
(74) Vertreter: Fischer, Volker

(57) **Zusammenfassung**

Maschine zur Trocknung von Werkstücken nach einer wässrigen Reinigung, aufweisend ein mit halogeniertem Ether oder einem Hydro-Fluor-Ether gefülltes Tauchbecken (1), eine Einrichtung zum Eintauchen von Werkstücken in das Tauchbecken (1), eine über dem Tauchbecken (1) angeordnete Dampfzone (2) mit Mitteln zur Kühlung (4) und einer Einrichtung (6) zur Erzeugung eines halogenierten Etherdampfes oder eines Hydro-Fluor-Etherdampfes, eine über der Dampfzone (2) angeordnete Trockenzone (3) mit Mitteln zur Tiefkühlung (5), eine auf dem halogenierten Ether oder dem Hydro-Fluor-Ether im Tauchbecken (1) aufschwimmende Abzugsrinne (7) und eine Einrichtung (11) zur Abscheidung von wässrigem Reinigungsmittel und/oder Restwasser aus dem mittels der aufschwimmenden Abzugsrinne (7) abgezogenen halogenierten Ether oder Hydro-Fluor-Ether sowie Mittel (12) zur Rückführung des von wässrigem Reinigungsmittel und/oder Restwasser getrennten halogenierten Ethers oder Hydro-Fluor-Ethers in den Kreislauf des halogenierten Ethers oder des Hydro-Fluor-Ethers.

## Beschreibung

Die Erfindung betrifft eine Maschine zur Trocknung von Werkstücken nach einer wässrigen Reinigung durch Verdrängung des an den gereinigten Werkstücken verbliebenen wässrigen Reinigungsmittels und Restwassers mit wasserunlöslichen flüssigen Substanzen, die eine höhere Dichte als Wasser besitzen. Die Erfindung betrifft insbesondere eine Maschine zur Trocknung von Werkstücken nach einer wässrigen Reinigung durch Tauchen der Werkstücke in ein mit halogeniertem Ether oder Hydro-Fluor-Ether gefülltes Becken.

Zur Erreichung hoher Reinheitsgrade sowie einer hohen Oberflächengüte bei der Reinigung von Werkstücken ist es notwendig, die gereinigten, noch mit Reinigungsmittel und/oder Restwasser kontaminierten Werkstücke rückstandsfrei zu trocknen. Dabei hat sich gezeigt, dass mit konventionellen Trocknungsmethoden, wie beispielsweise die Heißlufttrocknung, nicht die gewünschte hohe Reinheit oder Oberflächengüte erreicht wird.

Wasser besitzt eine verhältnismäßig hohe Oberflächenspannung und ist daher mittels Heißluft nur schwer aus feinsten Öffnungen, Spalten, Löchern usw. zu entfernen. Hinzu kommt, dass Wasser auch bei hoher Reinheit Inhaltsstoffe aufweist, die nach dem Trocknen als Schlieren oder Schleier auf den Werkstückoberflächen zurückbleiben.

Um dies zu verhindern, werden Werkstücke unmittelbar nach einer wässrigen Reinigung mit flüssigen wasserunlöslichen Substanzen, die eine höhere Dichte als Wasser aufweisen, beaufschlagt, so dass an den Werkstücken verbliebenes Restwasser aus den Öffnungen, Spalten, Löchern usw. verdrängt wird. Nachfolgend werden die Werkstücke getrocknet, um die vorgenannten Substanzen zu entfernen.

Aus dem Stand der Technik sind hierzu Maschinen bekannt, die die Verdrängung des an den Werkstücken anhaftenden Restwassers durch eine wasserunlösliche Substanz, die eine höhere Dichte als Wasser aufweist, und die nachfolgende Trocknung der Werkstücke umsetzen.

Insbesondere bekannt sind Maschinen, bei denen eine Reinigung der Werkstücke mit wässrigen Reinigungsmitteln erfolgt und nachfolgend die gereinigten, noch mit wässrigem Reinigungsmittel und/oder Restwasser benetzten Werkstücke in ein HFE-Tauchbad eingegeben werden. Das an den Werkstücken anhaftende wässrige Reinigungsmittel und/oder Restwasser wird durch das HFE verdrängt und schwimmt auf dem HFE-Tauchbad auf. Die das wässrige Reinigungsmittel und/oder Restwasser beinhaltende obere Flüssigkeitsschicht des HFE-Tauchbades wird kontinuierlich abgezogen. Die abgezogene Flüssigkeit wird mittels Pumpen einem Wasserabscheider zugeleitet, um das wässrige Reinigungsmittel und/oder Restwasser vom HFE zu trennen. Das HFE wird nachfolgend weiter gereinigt und dann dem Prozess wieder zugeführt.

Die Reinigungsanlagen sind so ausgeführt, dass die zu trocknenden Werkstücke in einen Korb eingeschüttet und der mit Werkstücken gefüllte Korb in das HFE-Tauchbad abgesenkt wird. Nach einer hinreichenden Verweildauer der Werkstücke im HFE-Tauchbad und einer überwiegenden Verdrängung des wässrigen Reinigungsmittels und/oder Restwassers von den Werkstücken wird der Korb dem HFE-Tauchbad entnommen und gelangt in eine oberhalb des Tauchbades befindliche Dampfzone. Er wird bei den meisten angebotenen Reinigungsanlagen nachfolgend zur weiteren Verdrängung von noch an den Werkstücken anhaftendem wässrigem Reinigungsmittel und/oder Restwasser in ein zweites HFE-Tauchbad abgesenkt. Danach gelangt er abermals in die oberhalb des Tauchbades oder der Tauchbäder befindliche Dampfzone, nachfolgend in eine darüber angeordnete Trockenzone. Beim Entnehmen des Korbes aus dem Tauchbad passieren die Werkstücke die das verdrängte wässrige Reinigungsmittel und/oder Restwasser beinhaltende obere Flüssigkeitsschicht des HFE-Tauchbades. Um zu vermeiden, dass eine erneute erhebliche Benetzung der Werkstücke mit wässrigem Reinigungsmittel und/oder Restwasser erfolgt, wird die obere Flüssigkeitsschicht des HFE-Tauchbades kontinuierlich abgezogen, und zwar in solchem Umfang, dass neben dem aufschwimmenden wässrigen Reinigungsmittel und/oder Restwasser erhebliche Mengen an HFE dem Tauchbad entnommen werden. Die abgezogene Flüssigkeitsmenge wird kontinuierlich durch regeneriertes, das heißt von wässrigem Reinigungsmittel und/oder Restwasser getrenntes HFE ersetzt. Die Reinigung und Regenerierung des mit wässrigem Reinigungsmittel und/oder Restwasser versetztem HFE bedarf aufgrund der großen Menge der vom Tauchbad abgezogenen Flüssigkeit eines nicht unerheblichen Aufwandes. Hinzu kommt, dass das äußert leicht verdampfende HFE ein für die Atmosphäre problematischer Stoff ist, dessen Umgang daher vom Gesetzgeber stark reglementiert ist.

Ziel der vorliegenden Erfindung ist es, eine Maschine zur Trocknung von Werkstücken nach einer wässrigen Reinigung durch Verdrängung des an den gereinigten Werkstücken verbliebenen wässrigen Reinigungsmittels und/oder Restwassers bereitzustellen, die effektiver als die aus dem Stand der Technik bekannten Maschinen arbeitet und dabei eine nahezu rückstandsfreie Trocknung gewährleistet. Dies umfasst insbesondere die Aufgabe, bei hoher Reinigungswirkung mit einem Abzug geringer Mengen der oberen Flüssigkeitsschicht des HFE-Tauchbades auszukommen.

Diese Aufgabe wird durch eine Maschine zur Trocknung von Werkstücken nach einer wässrigen Reinigung gemäß dem Gegenstand des unabhängigen Schutzanspruches 1 gelöst.

Die Ansprüche 2 bis 13 beschreiben vorteilhafte Weiterbildungen der erfindungsgemäßen Maschine.

Eine erfindungsgemäße Maschine umfasst mindestens ein mit halogeniertem Ether oder einem Hydro-Fluor-Ether gefülltes Tauchbecken, eine Einrichtung zum Eintauchen von Werkstücken in das Tauchbecken, eine über dem Tauchbecken angeordnete Dampfzone mit Mitteln zur Kühlung und eine Einrichtung zur Erzeugung eines halogenierten Etherdampfes oder eines Hydro-Fluor-Etherdampfes, eine über der Dampfzone angeordnete Trockenzone mit Mitteln zur Tiefkühlung, eine auf dem halogenierten Ether oder dem Hydro-Fluor-Ether im Tauchbecken aufschwimmende Abzugsrinne und eine Einrichtung zur Abscheidung von wässrigem Reinigungsmittel und/oder Restwasser aus dem mittels der aufschwimmenden Abzugsrinne abgezogenen mit wässrigem Reinigungsmittel und/oder Restwasser belasteten halogenierten Ether oder Hydro-Fluor-Ether sowie Mittel zur Rückführung des von wässrigem Reinigungsmittel und/oder Restwasser getrennten halogenierten Ethers oder Hydro-Fluor-Ethers in den Kreislauf des halogenierten Ethers oder des Hydro-Fluor-Ethers.

Ein Tauchbecken definiert einen nach oben offenen Raum oder einen oben offenen Behälter zur Aufnahme von flüssigem halogeniertem Ether oder Hydro-Fluor-Ether. Die Dampfzone definiert einen sich an die obere Öffnung des Tauchbeckens anschließenden seitlich eingehausten, d. h. oben und unten offenen Raum, der mindestens seitlich von Kühlrohren umgeben ist, die eine Oberflächentemperatur zwischen -2 °C bis -25 °C aufweisen und der mit einem halogeniertem Etherdampf oder einem Hydro-Fluor-Etherdampf gefüllt ist. Die Trockenzone definiert einen sich nach oben an die Dampfzone anschließenden, seitlich eingehausten, d. h. ebenfalls oben und unten offenen gekühlten Raum, der seitlich von Kühlrohren umgeben ist, die eine Oberflächentemperatur zwischen -27 °C bis -35 °C aufweisen.

Die Einrichtung zur Erzeugung eines halogenierten Etherdampfes oder eines Hydro-Fluor-Etherdampfes ist bevorzugt eine neben dem Tauchbecken angeordnete Dampfkammer, in der durch Wärmezufuhr halogeniertes Ether oder Hydro-Fluor-Ether bis zur Verdampfung erhitzt wird. Die Dampfkammer weist oben einen Dampfausgang auf, der in die Dampfzone mündet, so dass der erzeugte halogenierte Etherdampf oder Hydro-Fluor-Etherdampf in die Dampfzone eingeleitet wird.

Die Abzugsrinne ist eine auf dem flüssigen halogeniertem Ether oder Hydro-Fluor-Ether im Tauchbecken aufschwimmende Rinne, die so ausgebildet ist, dass kontinuierlich linienförmig die obere Flüssigkeitsschicht des halogenierten Ethers oder Hydro-Fluor-Ethers in Form eines Flüssigkeitsfilmes über eine horizontal ausgerichtete Einlaufkante linienförmig in die Abzugsrinne einströmt. Die Abzungsrinne weist bevorzugt einen oder mehrere Schwimmkörper auf, wobei der oder die Schwimmkörper zur Einstellung der Schwimmhöhe und damit zur Positionierung der Einlaufkante unterhalb der Ether- oder der Hydro-Fluor-Etheroberfläche des Tauchbades mit Ballast, beispielsweise mit Wasser, befüllbar sind. Die Einlaufkante ist bevorzugt 0,5 mm bis 3 mm unterhalb der Ether- oder der Hydro-Fluor-Etheroberfläche des Tauchbades positioniert. Die Einlaufkante der Abzugsrinne kann entlang einer oder mehrerer Seitenwänden des Tauchbeckens verlaufen. Von der Abzugsrinne führt eine mit Gefälle verlegte Leitung zu einem entsprechend angeordneten Schwerkraftwasserabscheider, so dass die abgezogene Flüssigkeit infolge der Wirkung der Schwerkraft in den Schwerkraftwasserabscheider eingeleitet wird. Der Ausgang für den halogenierten Ether oder den Hydro-Fluor-Ether des Schwerkraftwasserabscheiders ist mit der Dampfkammer oder dem Tauchbecken verbunden.

Die Trockenzone schließt die Maschine nach oben ab. Sie bildet eine nach oben offene Kälteschleuse, durch welche die zu trocknenden Werkstücke in die Maschine eingebracht und nach der Trocknung aus dieser wieder ausgebracht werden.

Zu trocknende Werkstücke werden nach der Reinigung mit wässrigem Reinigungsmittel noch mit diesem und/oder Restwasser benetzt, bevorzugt in einem Tauchkorb abgelegt, durch die obere Öffnung der Trockenzone in die Maschine eingebracht und durch die Dampfzone in das im Tauchbecken befindliche halogenierte Ether- oder Hydro-Fluor-Etherbad eingetaucht. Sie verweilen eine vorbestimmte Zeit im halogenierten Ether- oder Hydro-Fluor-Etherbad. An den Werkstücken, insbesondere in feinsten Öffnungen, Spalten oder Löchern, befindliches wässriges Reinigungsmittel und/oder Restwasser wird verdrängt und schwimmt auf der Oberfläche des halogenierten Ether- oder Hydro-Fluor-Etherbades auf. Nachfolgend werden die Werkstücke dem halogenierten Ether- oder Hydro-Fluor-Etherbad entnommen und gelangen in die Dampfzone. Während aus dem Bad mitgeschleppter halogenierter Ether oder Hydro-Fluor-Ether von den Werkstücken in das Bad zurücktropft, werden die Werkstücke auf eine Temperatur zwischen 55 °C bis 62 °C aufgeheizt, wobei noch verbliebene Reste an wässriger Reinigungsflüssigkeit und/oder Restwasser verdrängt werden. Nachfolgend gelangen die aufgeheizten Werkstücke in die Trockenzone. Infolge des hohen Temperaturgradienten zwischen den Werkstücken und der Umgebungstemperatur in der Trockenzone verdampfen an den Werkstücken verbliebene Reste an halogeniertem Ether oder Hydro-Fluor-Ether. Abschließend werden die getrockneten Werkstücke durch die obere Öffnung der Trockenzone aus der Maschine ausgetragen.

In der Trockenzone kondensieren die von den Werkstücken verdampften Reste an halogeniertem Ether oder Hydro-Fluor-Ether. Der halogenierte Ether- oder Hydro-Fluor-Etherdampfwird abgekühlt und sinkt in die Dampfzone hinab.
In der Dampfzone kondensiert an den Kühlrohren ständig halogenierter Ether- oder Hydro-Fluor-Etherdampf. Das Kondensat wird aufgefangen, einem Wasserabscheider und nachfolgend einem Molekularfilter zur Reinigung zugeführt und nach der Reinigung in das Tauchbecken eingeleitet. Insgesamt wird so der halogenierte Ether bzw. der Hydro-Fluor-Ether in der Maschine im Kreislauf geführt.

Die oberste Flüssigkeitsschicht des halogenierten Ether- oder Hydro-Fluor-Etherbades fließt während des gesamten Prozessablaufes kontinuierlich in Form eines gleichbleibend starken Flüssigkeitsfilmes und damit in einer pro Zeiteinheit definierten gleichen Menge in die Abzugsrinne und wird als gleichmäßiger Flüssigkeitsstrom dem Schwerkraftwasserabscheider zugeführt. Dadurch wird erreicht, dass kontinuierlich das verdrängte aufschwimmende wässrige Reinigungsmittel und/oder Restwasser aus dem halogenierten Ether- oder Hydro-Fluor-Etherbad entfernt wird. Diese Kontinuität wird durch die aufschwimmende Abzugsrinne erreicht, die unabhängig vom absoluten Füllstand des Tauchbeckens mit halogeniertem Ether oder Hydro-Fluor-Ether, d. h. auch vor, während und nach dem Eintauchen der Werkstücke in das halogenierte Ether- oder Hydro-Fluor-Etherbad, einen gleichmäßig in die Abzugsrinne einströmenden Flüssigkeitsfilm garantiert, indem sie infolge des Aufschwimmens auf der Oberfläche des halogenierten Ether- oder Hydro-Fluor-Etherbades ihre Höhenposition mit dem absoluten Füllstand des Tauchbeckens verändert, d. h. diesem angleicht.

Dadurch wird zum einen sichergestellt, dass die Oberfläche des halogenierten Ether- oder Hydro-Fluor-Etherbades optimal frei von aufschwimmender wässriger Reinigungsflüssigkeit und/oder Restwasser ist, ohne unnötig große Mengen an Flüssigkeit von der Oberfläche abzuziehen, wodurch eine erneute Benetzung der Werkstücke beim Austragen aus dem halogenierten Ether- oder Hydro-Fluor-Etherbad weitgehend vermieden wird, und zum anderen eine kontinuierliche mengenmäßig weitgehend konstante Zuführung der abgezogenen wässrigen Reinigungsflüssigkeit und/oder Restwasser enthaltenden halogenierten Ethers oder Hydro-Fluor-Ethers zum Schwerkraftwasserabscheider erfolgt. Dies kann bei bevorzugter Anordnung des Schwerkraftwasserabscheiders ohne zusätzliche Pumpen ausschließlich infolge der Wirkung der Schwerkraft erfolgen. Hierdurch wird eine von Pumpen verursachte erneute Durchmischung des halogenierten Ethers oder Hydro-Fluor-Ethers mit der wässrigen Reinigungsflüssigkeit und/oder Restwasser vermieden, wodurch die Abscheidewirkung des Schwerkraftwasserabscheiders deutlich verbessert wird. Die im Schwerkraftwasserabscheider abgetrennte wässrige Reinigungsflüssigkeit und/oder Restwasser wird entsorgt, während der halogenierte Ether oder Hydro-Fluor-Ether der Dampfkammer oder dem Tauchbecken zugeleitet wird.

Insgesamt besitzt eine erfindungsgemäße Maschine bei hoher Trocknungsqualität eine erheblich verbesserte Effektivität, da verglichen mit dem Stand der Technik eine deutlich geringere Menge an Flüssigkeit von der Tauchbadoberfläche abgezogen und diese ohne zusätzliche Pumpen zu dem oder den Schwerkraftwasserabscheider/n geleitet wird. Damit wird zugleich die Gefahr des Entweichens von halogeniertem Ether oder Hydro-Fluor-Ether in die Atmosphäre verringert.

Eine Maschine zur Trocknung von Werkstücken nach einer wässrigen Reinigung kann ein oder nebeneinander angeordnet mehrere Tauchbecken mit halogeniertem Ether oder Hydro-Fluor-Ether umfassen. Weist die Maschine mehrere Tauchbecken auf, können die Werkstücke nachfolgend von einem in das andere Tauchbecken überführt werden, wodurch schrittweise die an den Werkstücken anhaftende wässrige Reinigungsflüssigkeit und/oder Restwasser verdrängt wird.

Eine erfindungsgemäße Maschine kann neben der Trocknung auch eine Reinigungsstufe enthalten, um ggf. noch nach der wässrigen Reinigung an den Werkstücken anhaftende Feinstkontaminierungen im halogenierten Ether oder Hydro-Fluor-Etherbad abzutrennen. Dazu kann bzw. können das oder die Tauchbecken mit einer Einrichtung zur Erzeugung von Ultraschall ausgerüstet sein.

Die Erfindung soll nachfolgend anhand von zwei Ausführungsbeispielen, die in den zugehörigen Zeichnungen veranschaulicht sind, weiter erläutert werden.

### Die Figuren zeigen in

- Figur 1:: die Prinzipdarstellung einer Maschine mit einem Tauchbecken und in

- Figur 2:: die Prinzipdarstellung einer Maschine mit zwei nebeneinander angeordne- ten Tauchbecken.

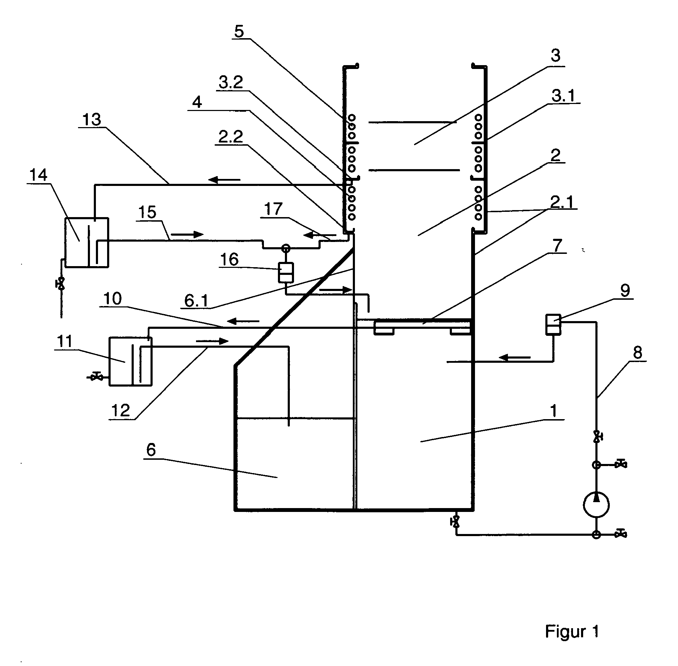

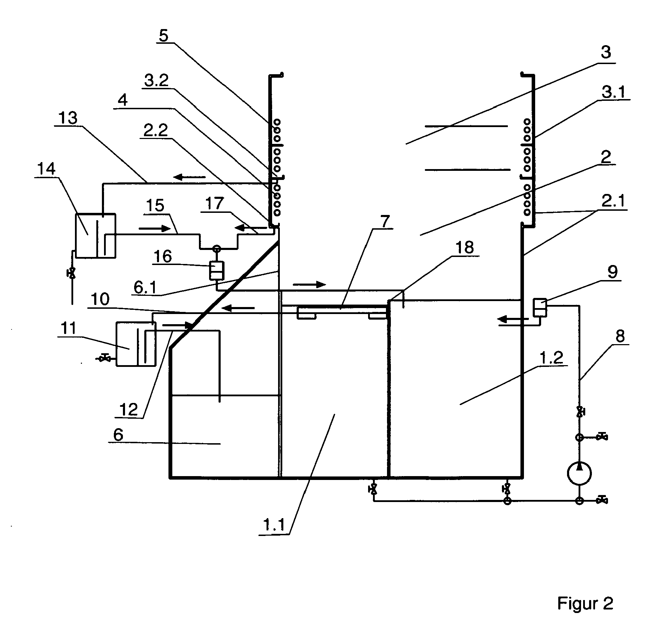

Die in beiden Figuren 1 und 2 prinzipiell dargestellten Maschinen zur Trocknung von Werkstücken nach einer wässrigen Reinigung weisen vertikal übereinander angeordnet mit Hydro-Fluor-Ether (HFE) gefüllte nach oben offene Tauchbecken 1, eine sich darüber anschließende, seitlich eingehauste, oben und unten offene Dampfzone 2 und eine sich über der Dampfzone 2 anschließende, ebenfalls seitlich eingehauste, oben und unten offene Trockenzone 3 auf. Die in Figur 2 gezeigte Maschine weist im Unterschied zu der in Figur 1 gezeigten Maschine zwei nebeneinander angeordnete Tauchbecken 1.1 und 1.2 auf, wobei die nach oben weisenden Öffnungen beider Tauchbecken 1.1 und 1.2 von einer darüber angeordneten Dampfzone 2 und nachfolgend einer Trockenzone 3 überspannt sind.

An den seitlichen Wänden 2.1 der Dampfzone 2 sind im oberen Bereich der Wände 2.1 Kühlrohre 4 und an den seitlichen Wänden 3.1 der Trockenzone 3 Tiefkühlrohre 5 angeordnet. Unterhalb der Kühlrohre 4 sowie der Tiefkühlrohre 5 sind Auffangrinnen 2.2 und 3.2 angebracht. Seitlich neben dem Tauchbecken 1 bzw. 1.1 befindet sich eine Dampfkammer 6. Der oben an der Dampfkammer 6 befindliche HFE-Dampfausgang 6.1 der Dampfkammer 6 mündet in den unteren Bereich der Dampfzone 2.

In den Tauchbecken 1, 1.1 sind auf dem HFE-Tauchbad aufschwimmend Abzugsrinnen 7 angeordnet. Jede Abzugsrinne (7) weist einen mit Wasser als Ballast befüllbaren Schwimmkörper auf. Jeder Schwimmkörper ist mit soviel Wasser befüllt, dass die horizontal ausgerichtete Einlaufkante jeder Abzugsrinne zwischen 1 mm bis 2 mm unterhalb der Oberfläche des HFE-Tauchbades positioniert ist. Die Abzugsrinnen 7 sind jeweils an einer Seitenwand des Tauchbeckens 1, 1.1 positioniert.
Jede Maschine weist eine Versorgungsleitung 8 zur Befüllung der Tauchbecken 1, 1.1 mit HFE auf, wobei in die Versorgungsleitung ein Filter 9 eingeschaltet ist. Von jeder Abzugsrinne 7 führt eine mit geringem Gefälle verlegte Leitung 10 zu einem Schwerkraftwasserabscheider 11. Vom Ausgang des Schwerkraftwasserabscheiders 11 führt eine ebenfalls mit geringem Gefälle verlegte Leitung 12 zur Dampfkammer 6. Von den Auffangrinnen 3.2 unterhalb der Tiefkühlrohre 5 führen mit geringem Gefälle verlegte Leitungen 13 zu einem weiteren Schwerkraftwasserabscheider 14. Vom Ausgang des Schwerkraftwasserabscheiders 14 führt eine Leitung 15 über einen Molekularfilter 16 zum Tauchbecken 1, 1.2. Zum Molekularfilter 16 führt eine weitere Leitung 17 von der unterhalb der Kühlrohre 4 angebrachten Auffangrinne 2.2.

Die Funktion der Maschine soll zunächst anhand der in Figur 1 gezeigten Maschine mit einem Tauchbecken 1 erläutert werden.

Das Tauchbecken 1 wird über die Versorgungsleitung 8 mit HFE befüllt. Die Abzugsrinne 7 schwimmt auf der Oberfläche des HFE-Tauchbades auf. Über die Einlaufkante strömt kontinuierlich eine entsprechend der Position der Einlaufkante in Bezug zur HFE-Tauchbadoberfläche sowie zur Länge der Einlaufkante vorbestimmte Menge an HFE in die Abzugsrinne 7, wird über die mit geringem Gefälle verlegte Leitung 10 in den Schwerkraftwasserabscheider 11 und nachdem es diesen passiert hat, wobei ggf. wässrige Reinigungsflüssigkeit und Restwasser abgetrennt wurden, über die Leitung 12 in die Dampfkammer 6 geleitet. In der Dampfkammer 6 wird kontinuierlich HFE verdampft. Der HFE-Dampf weist eine Temperatur zwischen 55 °C bis 62 °C auf und gelangt über den HFE-Dampfausgang 6.1 in die Dampfzone 2. An den Kühlrohren 4, deren Oberfläche eine Temperatur von ca. -5 °C aufweist, kondensiert kontinuierlich HFE-Dampf. Kondensiertes flüssiges HFE tropft in die Auffangrinne 2.2 und wird durch die Leitung 17 über einen Molekularfilter 16 dem Tauchbecken 1 zugeleitet. Die Oberfläche der Tiefkühlrohre 5 weist eine Temperatur von ca. -30 °C auf, wodurch in der Trockenzone 3 ein Kälteschleier erzeugt wird, der das Austreten von HFE-Dampf durch die nach oben offene Trockenzone 3 verhindert.

Zur Trocknung von mit wässrigen Reinigungsmitteln gereinigten Werkstücken werden diese noch mit wässrigem Reinigungsmittel und Restwasser von einer ggf. durchgeführten Spülung der Werkstücke benetzt in einen Tauchkorb gelegt. Der bestückte Tauchkorb wird durch die obere Öffnung der Trockenzone 3 in die Maschine eingeführt, passiert die Dampfzone 2, taucht in das HFE-Tauchbad ein und verbleibt hier eine vorbestimmte Zeit, während derer das an den Werkstücken anhaftende wässrige Reinigungsmittel und/oder Restwasser von den Oberflächen der Werkstücke sowie aus Poren und Spalten durch das eine erheblich größere Dichte als Wasser besitzende HFE verdrängt wird. Das verdrängte wässrige Reinigungsmittel und/oder Restwasser schwimmt auf der Oberfläche des HFE-Tauchbades auf und strömt kontinuierlich gemeinsam mit HFE über die Einlaufkante in die Abzugsrinne 7. Unabhängig vom absoluten Füllstand des Tauchbeckens 1 strömt eine gleichbleibende Menge an Flüssigkeit - HFE und wässrige Reinigungsmittel und/oder Restwasser - in die Abzugsrinne 7 und wird von dieser über die Leitung 11 dem Schwerkraftwasserabscheider 12 zugeleitet. Im Schwerkraftwasserabscheider 11 wird das wässrige Reinigungsmittel und/oder Restwasser vom HFE abgetrennt. Das HFE wird in die Dampfkammer 6 geleitet. Das abgetrennte wässrige Reinigungsmittel und/oder Restwasser wird abgeleitet. Durch die vorstehend beschriebene Kontinuität des Abziehens einer vordefinierten Menge an Flüssigkeit - HFE und wässrige Reinigungsmittel und/oder Restwasser - kann dieser Prozess ohne eine Pumpe durchgeführt werden. Die Flüssigkeit strömt durch die mit geringem Gefälle verlegten Leitungen 10, 12 lediglich infolge der Wirkung der Schwerkraft. Dadurch erfolgt keine erneute Durchmischung des auf dem HFE aufschwimmenden wässrigen Reinigungsmittels und/oder Restwassers mit dem HFE, wodurch im Schwerkraftwasserabscheider 11 sehr effektiv das wässrige Reinigungsmittel und/oder Restwasser vom HFE getrennt wird.

Nach dem Verweilen im HFE-Tauchbad wird der Tauchkorb mit den Werkstücken nach oben entnommen und verleibt eine vorbestimmte Zeit in der Dampfzone 2. Hier werden die Werkstücke auf eine Temperatur von ca. 58 °C erwärmt, wobei noch an den Werkstückoberflächen sowie in Poren und Spalten verbliebene Reste an wässriger Reinigungsflüssigkeit und/oder Restwasser ausgetrieben werden und mit dem aus dem Tauchbad mitgeschlepptem HFE in das Tauchbad zurücktropfen. An den Werkstückoberflächen sowie in Poren und Spalten verbliebenes HFE wird bei der Erwärmung der Werkstücke verdampft. Danach gelangt der Tauchkorb mit den Werkstücken in die Trockenzone 3, in der infolge des hohen Temperaturgradienten zwischen den Werkstücken und der Umgebungstemperatur in der Trockenzone 3 noch anhaftendes HFE und ggf. Reste von wässrigem Reinigungsmittel und/oder Restwasser verdampfen. Der Dampf kühlt sich ab und sinkt in die Dampfzone 2. Geringe Mengen des Dampfes kondensieren an den Tiefkühlrohren 5. Die getrockneten Werkstücke werden durch die obere Öffnung der Trockenzone 3 aus der Maschine entnommen. Das sich an den Tiefkühlrohren 5 abscheidende Kondensat aus HFE und wässrigem Reinigungsmittel und/oder Restwasser führt zu deren Vereisung, so dass ein periodisches Abtauen der Tiefkühlrohre erforderlich ist. Die dabei abtropfende Flüssigkeit aus HFE und wässrigem Reinigungsmittel und/oder Restwasser gelangt über die Leitung 13 in einen Schwerkraftwasserabscheider 14. Im Schwerkraftwasserabscheider 14 wird das wässrige Reinigungsmittel und/oder Restwasser vom HFE abgetrennt. Das HFE wird durch die Leitung 15 über einen Molekularfilter 16 in das Tauchbecken 1 geleitet. Das abgetrennte wässrige Reinigungsmittel und/oder Restwasser wird abgeleitet. Auch die zum bzw. vom Schwerkraftwasserabscheider 14 führenden Leitungen 13 und 15 sowie die Leitung 17 sind so mit geringem Gefälle verlegt, dass sich die Flüssigkeit ohne Pumpen, lediglich infolge der Wirkung der Schwerkraft durch diese Leitungen 13, 15, 17 fließt.

Die Funktion der in Figur 2 veranschaulichten Maschine mit zwei nebeneinander angeordneten Tauchbecken 1.1 und 1.2 ist prinzipiell analog der in Figur 1 veranschaulichten Maschine, jedoch mit dem Unterschied, dass das Verdrängen von an den Werkstückoberflächen bzw. in Poren und Spalten verbliebenem wässrigem Reinigungsmittel und/oder Restwasser in zwei Stufen durch aufeinander folgendes Eintauchen der Werkstücke in die Tauchbecken 1.1 und 1.2 erfolgt. Dabei ist lediglich im Tauchbecken 1.1 eine auf dem HFE aufschwimmende Abzugsrinne 7 angeordnet. Das Tauchbecken 1.2 besitzt an der gemeinsamen Wand zum Tauchbecken 1.1 eine Überlaufkante 18, über welche Flüssigkeit, d.h. HFE und auf der Tauchbadoberfläche aufschwimmendes wässriges Reinigungsmittel und/oder Restwasser, in das Tauchbecken 1.1 fließen kann. Dazu weist das Tauchbecken 1.2 einen höheren Füllstand mit HFE als das Tauchbecken 1.1 auf.

Zunächst werden die Werkstücke in das Tauchbecken 1.1 getaucht und verweilen hier eine vorbestimmte Zeit. Im Tauchbecken 1.1 wird der Großteil des anhaftenden wässrigen Reinigungsmittels und/oder Restwassers durch das HFE von den Werkstückoberflächen bzw. aus Poren und Spalten verdrängt, schwimmt auf der Oberfläche des HFE-Tauchbades auf und strömt gemeinsam mit HFE kontinuierlich in die Abzugsrinne 7. Danach werden die Werkstücke aus dem Tauchbecken 1.1 entnommen und in das Tauchbecken 1.2 überführt. Während der Überführung durch die Dampfzone 2 tropft anhaftende Flüssigkeit - HFE und wässrige Reinigungsmittel und/oder Restwasser - von den Werkstücken in das Tauchbecken 1.1 zurück. Im Tauchbad des Tauchbeckens 1.2 werden noch an den Werkstückoberflächen, insbesondere aber in Poren und Spalten, verbliebene Reste an wässrigem Reinigungsmittels und/oder Restwasser verdrängt. Die verdrängten Reste an wässrigem Reinigungsmittel und/oder Restwasser schwimmen auf der Oberfläche des HFE-Tauchbades im Tauchbecken 1.2 auf und fließen über die Überlaufkante 18 in das Tauchbecken 1.1. Hier fließen sie, wie bereits mehrfach beschrieben, in die aufschwimmende Abzugsrinne 7 und werden, wie zu Figur 1 erläutert, weiterbehandelt. Eine Maschine, wie sie durch Figur 2 veranschaulicht wird, zeichnet sich durch eine erste grobe Stufe des Verdrängens von wässrigem Reinigungsmittel und/oder Restwasser und eine zweite Feinstufe des Verdrängens von nach Stufe 1 verbliebenen Resten an wässrigem Reinigungsmittel und/oder Restwasser aus. Nach Stufe 2 werden die Werkstücke, wie bereits zu Figur 1 erläutert, in die Dampfzone 2 verbracht und weiterbehandelt, d.h. erwämt, letzte Reste von wässrigem Reinigungsmittel und/oder Restwasser werden ausgetrieben und nachfolgend die Werkstücke getrocknet.

Eine zweistufige Verdrängung, wie sie mit einer Maschine gemäß Figur 2 durchgeführt wird, ist insbesondere dann anzuwenden, wenn erhebliche Mengen an wässrigem Reinigungsmittel und/oder Restwasser an den Werkstücken anhaften und eine besonders rückstandsfreie Trocknung erreicht werden soll.

Selbstverständlich kann eine derartige Maschine mit zwei Tauchbecken 1.1 und 1.2 auch in jedem Tauchbecken 1.1 und 1.2 eine auf der Oberfläche des Tauchbades aufschwimmende Abszugsrinne aufweisen.

### Liste der verwendeten Bezugszeichen

- 1: - Tauchbecken
- 1.1: - 1. Tauchbecken
- 1.2: - 2. Tauchbecken
- 2: - Dampfzone
- 2.1: - seitliche Wände der Dampfzone 2
- 2.2: - Auffangrinne
- 3: - Trockenzone
- 3.1: - seitliche Wände der Trockenzone 3
- 3.2: - Auffangrinne
- 4: - Kühlrohre
- 5: - Tiefkühlrohre
- 6: - Dampfkammer
- 6.1: - HFE-Dampfausgang der Dampfkammer
- 7: - Abzugsrinne
- 8: - Versorgungsleitung
- 9: - Filter
- 10: - Leitung
- 11: - Schwerkraftwasserabscheider
- 12: - Leitung
- 13: - Leitung
- 14: - Schwerkraftwasserabscheider
- 15: - Leitung
- 16: - Molekularfilter
- 17: - Leitung
- 18: - Überlaufkante

## Patentansprüche

1. Maschine zur Trocknung von Werkstücken nach einer wässrigen Reinigung, mindestens aufweisend
- ein mit halogeniertem Ether oder einem Hydro-Fluor-Ether gefülltes Tauchbecken (1),
- eine Einrichtung zum Eintauchen von Werkstücken in das Tauchbecken (1),
- eine über dem Tauchbecken (1) angeordnete Dampfzone (2) mit Mitteln zur Kühlung (4) und einer Einrichtung (6) zur Erzeugung eines halogenierten Etherdampfes oder eines Hydro-Fluor-Etherdampfes und
- eine über der Dampfzone (2) angeordnete Trockenzone (3) mit Mitteln zur Tief- kühlung (5),
**dadurch gekennzeichnet,**
**dass** im Tauchbecken (1) eine auf dem halogenierten Ether oder dem Hydro-Fluor-Ether aufschwimmende Abzugsrinne (7) angeordnet ist und die Maschine eine Einrichtung (11) zur Abscheidung von wässrigem Reinigungsmittel und/oder Restwasser von dem aus dem Tauchbecken (1) abgezogenen mit wässrigem Reinigungsmittel und/oder Restwasser belasteten halogenierten Ether oder Hydro-Fluor-Ether aufweist und Mittel (12) zur Rückführung des von wässrigem Reinigungsmittel und/oder Restwasser getrennten halogenierten Ethers oder Hydro-Fluor-Ethers in den Kreislauf des halogenierten Ethers oder des Hydro-Fluor-Ethers umfasst.

2. Maschine nach Anspruch 1,
**dadurch gekennzeichnet,**
**dass** die aufschwimmende Abzugsrinne (7) eine horizontal ausgerichtete Einlaufkante aufweist, die geringfügig unterhalb der Ether- oder der Hydro-Fluor-Etheroberfläche des Tauchbades positioniert ist.

3. Maschine nach Anspruch 2,
**dadurch gekennzeichnet,**
**dass** die horizontal ausgerichtete Einlaufkante linienförmig entlang einer Seitenwand des Tauchbeckens (1) positioniert ist.

4. Maschine nach Anspruch 2,
**dadurch gekennzeichnet,**
**dass** die horizontal ausgerichtete Einlaufkante linienförmig entlang mehrerer Seitenwände des Tauchbeckens (1) positioniert ist.

5. Maschine nach Anspruch 1 bis 4,
**dadurch gekennzeichnet,**
**dass** die aufschwimmende Abzugsrinne (7) einen oder mehrere Schwimmkörper aufweist.

6. Maschine nach Anspruch 5,
**dadurch gekennzeichnet,**
**dass** der oder die Schwimmkörper mit Ballast befüllbar ist/sind.

7. Maschine nach Anspruch 1 bis 6,
**dadurch gekennzeichnet,**
**dass** nebeneinanderliegend zwei mit halogeniertem Ether oder Hydro-Fluor-Ether gefüllte Tauchbecken (1.1, 1.2) angeordnet sind, wobei oberhalb beider Tauchbecken (1.1, 1.2), die nach oben weisenden Öffnungen beider Tauchbecken (1.1, 1.2) gemeinsam überspannend, eine Dampf- (2) und darüber eine Trockenzone (3) angeordnet ist.

8. Maschine nach Anspruch 1 bis 7,
**dadurch gekennzeichnet,**
**dass** die Einrichtung (11) zur Abscheidung von wässrigem Reinigungsmittel und/oder Restwasser aus dem abgezogenen halogenierten Ether oder dem Hydro-Fluor-Ether als Schwerkraftwasserabscheider (11, 14) ausgebildet ist.

9. Maschine nach Anspruch 1 bis 8
**dadurch gekennzeichnet,**
**dass** der oder die Schwerkraftwasserabscheider (11, 14) so angeordnet ist oder sind, dass der abgezogene, mit wässrigem Reinigungsmittel und/oder Restwasser belastete halogenierte Ether oder Hydro-Fluor-Ether nur durch die Wirkung der Schwerkraft aus der Abzugsrinne (7) bzw. den Auffangrinnen (2.2, 3.2) in den Schwerkraftwasserabscheider (11, 14) fließt.

10. Maschine nach Anspruch 1 bis 9
**dadurch gekennzeichnet,**
**dass** der den Schwerkraftwasserabscheider (11, 14) verlassende, von wässrigem Reinigungsmittel und/oder Restwasser getrennte halogenierte Ether oder Hydro-Fluor-Ether nur durch die Wirkung der Schwerkraft in den Kreislauf des halogenierten Ethers oder des Hydro-Fluor-Ethers zurückgeführt wird.

11. Maschine nach Anspruch 1 bis 10,
**dadurch gekennzeichnet,**
**dass** die Einrichtung (6) zur Erzeugung eines halogenierten Etherdampfes oder eines Hydro-Fluor-Etherdampfes neben dem oder den Tauchbecken (1) angeordnet und als Dampfkammer (6) ausgebildet ist und der Dampfausgang (6.1) der Dampfkammer (6) in die Dampfzone (2) mündet.

12. Maschine nach Anspruch 1 bis 11,
**dadurch gekennzeichnet,**
**dass** der den Schwerkraftwasserabscheider (11) verlassende, von wässrigem Reinigungsmittel und/oder Restwasser getrennte halogenierte Ether oder Hydro-Fluor-Ether in die Dampfkammer (6) eingeleitet wird.

13. Maschine nach Anspruch 1 bis 11,
**dadurch gekennzeichnet,**
**dass** der den Schwerkraftwasserabscheider (14) verlassende, von wässrigem Reinigungsmittel und/oder Restwasser getrennte halogenierte Ether oder Hydro-Fluor-Ether in ein Tauchbecken (1) eingeleitet wird.
